Europäisches Patentamt

European Patent Office

Office européen des brevets

(11) Numéro de publication : **0 356 309 B1**

## FASCICULE DE BREVET EUROPEEN

(45) Date de publication du fascicule du brevet :
08.07.92 Bulletin 92/28

(51) Int. Cl.⁵ : **B64C 25/50**

(21) Numéro de dépôt : **89402267.2**

(22) Date de dépôt : **10.08.89**

(54) **Dispositif de manoeuvre en orientation du train de roues de l'atterrisseur auxiliaire d'un aéronef.**

(30) Priorité : **22.08.88 FR 8811100**

(43) Date de publication de la demande :
28.02.90 Bulletin 90/09

(45) Mention de la délivrance du brevet :
08.07.92 Bulletin 92/28

(84) Etats contractants désignés :
**DE GB IT NL SE**

(56) Documents cités :
**GB-A- 901 836**
**US-A- 2 930 547**

(73) Titulaire : **MESSIER BUGATTI**
**Zone aéronautique Louis Bréguet B.P. 40**
**F-78140 Velizy Villacoublay (FR)**

(72) Inventeur : **Veaux, Jacques**
**16 boulevard de la Liberté**
**F-92320 Chatillon (FR)**
Inventeur : **Derrien, Michel**
**14bis rue du Parc de Clagny**
**F-78000 Versailles (FR)**
Inventeur : **Hainaut, Jean-Pierre**
**13 avenue de Bretagne**
**F-94510 La Queue en Brie (FR)**

(74) Mandataire : **Robert, Jean-Pierre et al**
**CABINET BOETTCHER 23, rue la Boétie**
**F-75008 Paris (FR)**

EP 0 356 309 B1

Jouve, 18, rue Saint-Denis, 75001 PARIS

## Description

La présente invention concerne un dispositif de manoeuvre en orientation du train de roues porté par l'atterrisseur auxiliaire à l'avant d'un aéronef autour de l'axe de cet atterrisseur.

La direction d'un avion est généralement assurée, lors de son roulage, par le train de roues porté par l'atterrisseur avant appelé encore atterrisseur auxiliaire. Ce train de roues équipe l'extrémité de la jambe télescopique de cet atterrisseur, et son orientation implique la manoeuvre en rotation de la tige d'extrémité de cette jambe qui coulisse axialement par rapport à un caisson dans lequel est installé, entre autres appareils, un amortisseur.

On connaît, aujourd'hui deux types principaux de solutions pour rendre directeur ce train de roues avant, qui dépendent partiellement de l'architecture de l'atterrisseur. Les atterrisseurs comportent le plus souvent un caisson tubulaire, qui est la pièce de structure articulée à l'avion que l'on manoeuvre pour rentrer et sortir le train d'atterrissage, et à laquelle sont attelés tous les organes moteurs, de contreventement et de verrouillage de l'atterrisseur. De ce caisson fait saillie la tige télescopique qui porte l'essieu et qui coopère avec l'amortisseur logé dans le caisson.

Dans un premier type, ce caisson peut ne constituer qu'une pièce de reprise d'efforts et le plus souvent, dans ce cas, il est en alliage d'aluminium. Pour assurer la fonction d'orientation des roues, ce type d'atterrisseur met en oeuvre, entre le caisson et la tige, un tube monté tournant dans le caisson et arrêté axialement par rapport à ce dernier, dans une position où il dépasse du caisson. La tige coulisse alors dans ce tube, tout en lui étant liée en rotation au moyen d'un compas extérieur articulé entre la partie saillante du tube et la partie de la tige voisine des roues. Dans sa partie interne au caisson, le tube tournant est solidaire d'une roue dentée qui coopère avec une crémaillère orthogonale à l'axe du tube et dont les déplacements longitudinaux, obtenus par exemple par un moyen hydraulique du genre vérin, engendrent la rotation du tube sur lui-même dans le caisson. Cette rotation est transmise à la tige par le compas.

Dans un second type le caisson, tel qu'illustré par le document US-A-2 930 547, peut également participer aux fonctions de guidage et d'amortissement de la tige. Il est généralement, dans ce cas, en acier et la tige y coulisse directement. Pour faire tourner la tige autour de son axe, le mécanisme mis en oeuvre consiste en un compas attelé entre la partie de la tige voisine des roues et une bague montée tournante dans une gorge extérieure du caisson, cette bague comportant des pattes extérieures attelées chacune à la tige d'un vérin dont le cylindre est articulé sur des extensions latérales du caisson. Ainsi les vérins actionnent en rotation la bague dont le mouvement est transmis à la tige de l'atterrisseur par le compas.

La présente invention entend concilier les avantages respectifs des deux solutions antérieures dans une réalisation simple et économique, à savoir un caisson en alliage d'aluminium et des vérins indépendants facilement démontables.

A cet effet, l'invention a donc pour objet un dispositif de manoeuvre en orientation des roues équipant l'extrémité inférieure de la jambe de l'atterrisseur auxiliaire d'un aéronef autour de l'axe de cette jambe, cette jambe comprenant un caisson articulé à la structure de l'aéronef, un tube monté tournant à l'intérieur du caisson et faisant saillie hors de ce caisson, une tige coulissante axialement dans le tube dont l'extrémité libre porte les roues, et un compas de liaison en rotation du tube et de la tige. Ce dispositf, selon la caractéristique principale de l'invention, comporte au moins un vérin situé dans un plan sensiblement perpendiculaire à l'axe de la jambe, articulé par l'extrémité de sa tige à une oreille latérale de manoeuvre du tube et par son cylindre à deux flasques parallèles, perpendiculaires à l'axe de la jambe dont l'un est solidaire du caisson et l'autre monté tournant autour du tube et arrêté en rotation par rapport au caisson au moyen d'un toc solidaire de ce caisson. Cette architecture permet de mettre en oeuvre des vérins d'actionnement des roues à l'extérieur du caisson, ce qui rend leur accès extrèmement aisé, tout en pouvant conserver les avantages de légèreté et de fabrication économique d'un caisson en alliage d'aluminium.

L'invention sera mieux comprise au cours de la description donnée ci-après d'un mode de réalisation qui permettra d'en dégager les avantages et les caractéristiques secondaires.

Il sera fait référence aux dessins annexés, dans lesquels :
— la figure 1 est une vue schématique partielle en coupe d'un atterrisseur équipé du dispositf selon l'invention (les vérins n'étant pas représentés),
— la figure 2 est une vue partielle suivant A de la figure 1,
— la figure 3 représente, par une vue de dessus partielle selon B de la figure 1, le dispositif de l'invention équipé de ses vérins, mais dans laquelle on n'a pas représenté, pour des raisons de clarté du dessin, les pièces de la jambe d'amortisseur.

En se reportant à ces figures, on voit l'extrémité d'un atterrisseur auxiliaire, à la partie inférieure de laquelle sont normalement montées des roues qui ne sont pas représentées.

Cet atterrisseur comporte une jambe 1, comprenant essentiellement un caisson 2 supérieur, dont on ne voit que la partie inférieure, qui est articulé en partie haute à la structure de l'avion (non visible sur le dessin). L'atterrisseur comporte également une contrefiche de contreventement qui est constituée par un organe du type genouillère, articulé entre l'avion et la partie inférieure du caisson 2, à l'endroit d'une chape 3 prévue à cet effet.

Dans le caisson 2, un tube 4 est monté à rotation par sa partie supérieure, et est immobilisé axialement dans le tube par des moyens non représentés, dans une position telle qu'une partie inférieure 4a de ce tube est en saillie sous le caisson 2. Ce tube 4 constitue une portée de guidage pour une tige 5, dans son coulisement axial par rapport au caisson 2. C'est l'extrémité inférieure de la tige 5, à l'extérieur du tube 4, qui porte les roues de l'atterrisseur auxiliaire. La liaison en rotation entre le tube et la tige, qui autorise leur déplacement relatif axial, est assurée par un compas extérieur 6, articulé entre l'extrémité inférieure du tube et la partie inférieure de la tige.

Ces dispositions connues sont équipées des moyens spécifiques de l'invention de la manière suivante.

Le caisson 2 est pouvu, dans sa partie inférieure, de pattes 2a et 2b pour la fixation d'un flasque 7 fixe. Ce flasque s'étend perpendiculairement à l'axe de la jambe de l'atterrisseur, et présente deux oreilles 7a et 7b, chacune formant la branche supérieure d'une chape d'articulation d'un vérin 8a,8b. Dans une variante non représentée, on peut ne mettre en oeuvre qu'un seul vérin, mais pour des raisons de dimensionnement des vérins, on préférera mettre en oeuvre deux vérins convergents, coplanaires dans un plan sensiblement perpendiculaire à l'axe de la jambe de l'atterrisseur, et symétriques par rapport à un plan contenant cet axe dans leur position correspondant à une orientation des roues dans l'axe longitudinal de l'avion..

Le tube 4 possède dans sa partie 4a une gorge 9 dans laquelle est monté tournant un second flasque 10, également perpendiculaire à l'axe de l'atterrisseur. Ce flasque 10 est en deux parties 10a et 10b, assemblées par des boulons 11 pour permettre sa mise en place dans la gorge 9. La partie 10a possède trois oreilles 12a, 12b et 13. Les oreilles 12a et 12b s'étendent sous les oreilles 7a et 7b du flasque 7 pour former chacune l'autre branche de la chape d'articulation du vérin 8a,8b correspondant. L'oreille 13 possède une ouverture 13a destinée à recevoir l'extrémité inférieure 14a d'un toc 14 de liaison en rotation du flasque 10 et du caisson 2. A l'opposé des oreilles, la partie 10a est conformée en une demi-bride, pour ceinturer, avec la partie 10b qui forme l'autre demi-bride, le tube 4 à l'intérieur de la gorge 9.

Le toc 14 est une butée qui est fixée au caisson 2 par l'intermédiaire des pattes 3a et 3b de la chape 3 d'attelage de la contrefiche de contreventement de la jambe de l'atterrisseur. A cet effet le toc 14 est articulé par un axe 15 dans la chape 3 dont les pattes ont été prolongées vers l'extérieur et vers le bas. Cette fixation peut être assurée de tout autre manière convenable. On voit que le toc est ici un levier plat qui offre sa largeur dans le sens des efforts de couple qu'il est destiné à reprendre.

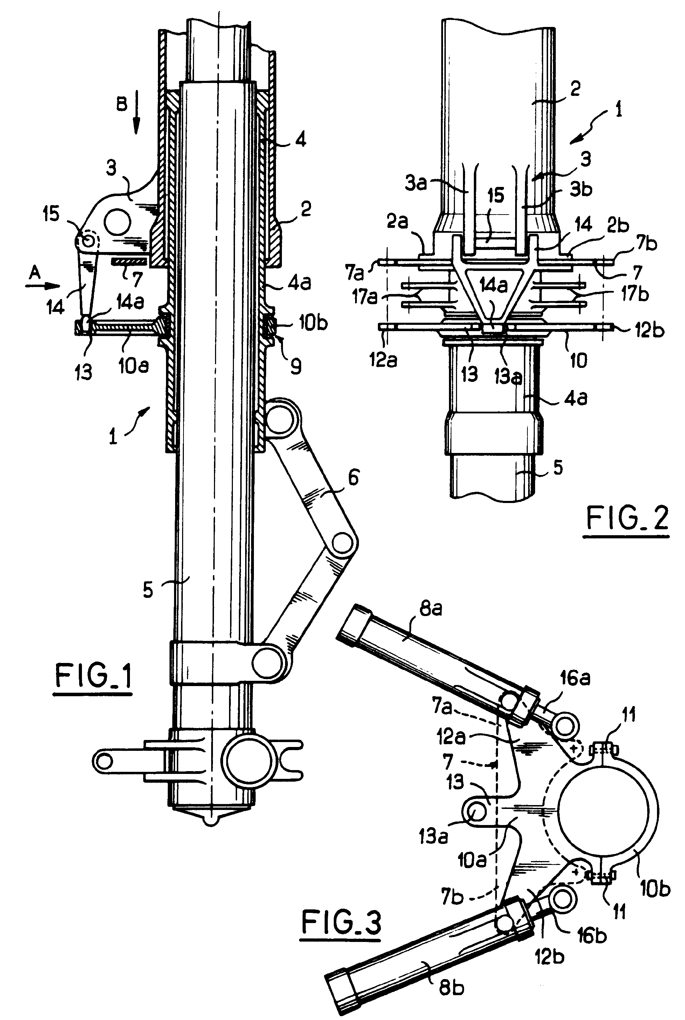

Les vérins 8a et 8b sont articulés par leur cylindre, pour le vérin 8a, entre les oreilles 7a et 12a des flasques 7 et 10, et pour le vérin 8b, entre les oreilles 7b et 12b de ces flasques. La tige 16a et 16b de chaque vérin est articulée à une paire de pattes latérales et parallèles 17a et 17b, portée par le tube, entre l'extrémité du caisson et la gorge 9. L'emplacement des vérins par rapport au tube 4 a été déterminé pour qu'ils puissent faire tourner le tube sur une amplitude angulaire compatible avec les rayons de braquage minimaux requis pour l'avion. La figure 3 est une illustration de la géométrie des moyens de l'invention, lorsque l'orientation des roues est dans l'axe longitudinal de l'avion.

Pour commander l'orientation des roues, on alimente les vérins 8a et 8b dans le sens souhaité, par exemple sortie de la tige 16a et rétraction de la tige 16b pour faire tourner les roues, vues de dessus dans le sens des aiguilles d'une montre. Les cylindres des vérins pivotent entre les flasques 7 et 10, autour de leur articulation fixe puisque les flasques 7 et 10 sont solidaires du caisson, directement pour le flasque 7, et par l'intermédiaire du toc 14 pour le flasque 10. En effet le flasque 10 étant retenu axialement par la gorge 9, elle-même immobile axialement par rapport au caisson du fait de l'immobilité axiale du tube 4 dans le caisson, et arrêtée en rotation par le toc 14, est un support immobile pour les articulations des cylindres des vérins 8a et 8b. Les efforts que subissent les cylindres, lors de leur alimentation, sont donc repris de manière équilibrée par la structure fixe solidaire du caisson. Les extrémités des tiges 16a et 16b décrivent, quant à elles, un arc de cercle autour de l'axe de l'atterrisseur, en entraînant le tube 4 dans leur rotation, grâce aux pattes 17a et 17b de ce tube auxquelles les tiges sont articulées. Cette rotation est transmise à la tige 5 par le compas 6, et l'orientation des roues est modifiée en conséquence.

On voit que cette disposition des vérins est simple et d'accès facile pour leur mise en place, leur démontage et leur entretien. Une application intéressante de l'invention réside dans l'équipement des avions gros porteurs.

**Revendications**

1. Dispositif de manoeuvre en orientation des roues équipant l'extrémité inférieure de la jambe(1) de l'atterrisseur auxiliaire d'un aéronef autour de l'axe de cette jambe, cette jambe(1) comprenant un caisson(2) articulé à la structure de l'aéronef, un tube(4) monté tournant à l'intérieur du caisson(2) et faisant saillie hors de ce caisson, une tige(5) coulissante axialement dans le tube(4) dont l'extrémité libre porte les roues, et un compas(6) de liaison en rotation du tube(4) et de la tige(5), caratérisé en ce qu'il comporte au moins un vérin(8a,8b) situé dans un plan sensiblement perpendiculaire à l'axe de la jambe(1), articulé par l'extrémité de sa tige(16a,16b) à une oreille latérale(17a,17b) de manoeuvre du tube(4) et par son cylindre à deux flasques(7,10) parallèles, perpendiculaires à l'axe de la jambe(1) dont l'un(7) est solidaire du caisson(2) et l'autre(10) monté tournant autour du tube(4) et arrèté en rotation par rapport au caisson(2) au moyen d'un toc(14) solidaire de ce caisson.

2. Dispositif selon la revendication 1, caractérisé en ce qu'il comporte deux vérins(8a,8b) coplanaires, symétriques l'un de l'autre par rapport à un plan contenant l'axe de la jambe(1).

3. Dispositif selon la revendication 1 ou la revendication 2 caractérisé en ce que le second flasque(10) nommé est en deux parties(10a,10b) attelées l'une à l'autre pour former un collier logé à rotation dans une gorge(9) du tube tournant(4).

4. Dispositif selon l'une quelconque des revendications précédentes, caractérisé en ce que le toc(14) susdit est fixé au caisson(2) au moyen d'une chape(3) d'articulation.

5. Dispositif selon la revendication 4 caractérisé en ce que des branches de la chape(3) sont formées par une prolongation des pattes de la chape(3) d'articulation de la contrefiche de contreventement de la jambe(1) de l'atterrisseur.


**Patentansprüche**

1. Einrichtung zur Lenkeinstellung von am unteren Ende des Bugfahrwerkbeins (1) eines Flugzeuges angeordneten Rädern um die Achse dieses Fahrwerkbeins, wobei dieses Fahrwerkbein (1) eine gelenkig mit der Flugzeugstruktur verbundene Aufnahmehülse (2) umfaßt, ferner ein drehbar innerhalb der Aufnahmehülse (2) angeordnetes, aus der Aufnahmehülse herausragendes Rohr (4), eine axial in dem Rohr verschiebbare Strebe (5), deren freies Ende die Räder trägt, und eine Schere (6) zur Drehverbindung des Rohrs (4) mit der Strebe (5), dadurch gekennzeichnet, daß sie zumindest einen Stellzylinder (8a, 8b) aufweist, welcher in einer im wesentlichen rechtwinklig zur Achse des Fahrwerkbeins (1) liegenden Ebene angeordnet ist und welcher über das Ende seiner Stößelstange (16a, 16b) mit einem seitlichen Betätigungsfortsatz (17a, 17b) des Rohres (4) und über seinen Zylinder mit zwei parallelen Flanschen (7, 10) gelenkig verbunden ist, die rechtwinklig zur Achse des Fahrwerkbeins (1) angeordnet sind, von denen einer (7) mit der Aufnahmehülse (2) fest verbunden und der andere (10) drehbar auf dem Rohr (4) angeordnet und gegenüber der Aufnahmehülse (2) mittels eines mit dieser Hülse fest verbundenen Mitnehmers (14) drehgekoppelt ist.

2. Einrichtung nach Anspruch 1, dadurch gekennzeichnet, daß sie zwei in der gleichen Ebene liegende Stellzylinder (8a, 8b) hat, die symmetrisch zu einer die Achse des Fahrwerkbeins (1) enthaltenen Ebene angeordnet sind.

3. Einrichtung nach Anspruch 1 oder Anspruch 2, dadurch gekennzeichnet, daß der zweite Flansch (10) aus zwei Teilen (10a, 10b) besteht, die miteinander so verbunden werden, daß sie einen drehbar in einer Nut (9) des drehbaren Rohres (4) angeordneten Kragen bilden.

4. Einrichtung nach einem der vorangehenden Ansprüche, dadurch gekennzeichnet, daß der Mitnehmer (14) an der Aufnahmehülse (2) mittels einer Gelenkgabel (3) befestigt ist.

5. Einrichtung nach Anspruch 4, dadurch gekennzeichnet, daß Schenkel der Gabel (3) durch eine Verlängerung der Füße dieser Gabel (3) gebildet sind, die für eine Gelenkverbindung der Gegenstrebe einer Knickverstrebung des Fahrwerkbeines (1) vorgesehen ist.


**Claims**

1. A device for steering the wheels fitted to the bottom end of the leg (1) of the nose landing gear of an aircraft, said wheels being steered about the axis of said leg, said leg (1) comprising a strut (2) hinged to the structure of the aircraft, a tube (4) mounted to rotate inside the strut (2) and projecting outside the strut, a rod (5) slidably mounted inside the tube (4) and carrying the wheels at its free end, and a scissor linkage (6) for constraining the tube (4) and the rod (5) to rotate together, the device being characterized in that it comprises at least one actuator (8a, 8b) situated in a plane substantially perpendicular to the axis of the leg (1), the end of the actuator rod (16a, 16b) being hinged to a side lug (17a, 17b) for rotating the tube (1), and the actuator cylinder being hinged to two parallel plates (7, 10) extending perpendicularly to the axis of the leg (1), with one (7) of the plates being fixed to the strut (2) and with the other plate (10) being rotatably mounted about the tube (4) and being prevented from rotating relative to the strut (2) by means of a dog (14) fixed to the strut.

2. A device according to claim 1, characterized in that it includes two coplanar actuators (8a, 8b) disposed symmetrically to each other about a plane containing the axis of the leg (1).

3. A device according to claim 1 or claim 2, characterized in that the second above-mentioned plate (10) is constituted by two portions (10a, 10b) which are coupled together to form a collar rotatably received in a groove (19) in the rotary tube (4).

4. A device according to any preceding claim, characterized in that the above-mentioned dog (14) is fixed to the strut (2) by means of a hinge fork (3).

5. A device according to claim 4, characterized in that the branches of the fork (3) are formed by extensions of the tabs of the hinge fork (3) for the brace of the landing gear leg (1).

FIG.1

FIG.2

FIG.3